Europäisches Patentamt

European Patent Office

Office européen des brevets

(19)

(11) **EP 0 699 372 B1**

(12) **EUROPÄISCHE PATENTSCHRIFT**

(45) Veröffentlichungstag und Bekanntmachung des Hinweises auf die Patenterteilung:
**27.11.2002  Patentblatt 2002/48**

(21) Anmeldenummer: **95910692.3**

(22) Anmeldetag: **16.03.1995**

(51) Int Cl.7: **H04Q 7/36**

(86) Internationale Anmeldenummer:
**PCT/IB95/00173**

(87) Internationale Veröffentlichungsnummer:
**WO 95/025408 (21.09.1995 Gazette 1995/40)**

(54) **MOBILFUNKÜBERTRAGUNGSSYSTEM MIT KANALVERGABE UNTER ANWENDUNG DER ERWEITERTEN KOHONEN-NETZE**

MOBILE RADIO TRANSMISSION SYSTEM WITH CHANNELS ALLOCATED USING EXPANDED KOHONEN NETWORKS

SYSTEME DE RADIOTRANSMISSION MOBILE A ATTRIBUTION DE CANAUX A L'AIDE DE RESEAUX DE KOHONEN ELARGIS

(84) Benannte Vertragsstaaten:
**DE FR GB**

(30) Priorität: **16.03.1994  DE 4408884**

(43) Veröffentlichungstag der Anmeldung:
**06.03.1996  Patentblatt 1996/10**

(73) Patentinhaber:
• **Koninklijke Philips Electronics N.V.**
**5621 BA Eindhoven (NL)**
• **Philips Corporate Intellectual Property GmbH**
**20099 Hamburg (DE)**
Benannte Vertragsstaaten:
**DE**

(72) Erfinder:
• **DUQUE-ANTON, Jesus-Manuel**
**D-52076 Aachen (DE)**
• **KUNZ, Dietmar, Wilhelm**
**D-52072 Aachen (DE)**
• **RÜBER, Bernhard, Jakob**
**D-52159 Roetgen (DE)**

(74) Vertreter: **Volmer, Georg, Dipl.-Ing. et al**
**Philips Corporate Intellectual Property GmbH,**
**Postfach 50 04 42**
**52088 Aachen (DE)**

(56) Entgegenhaltungen:
**EP-A- 0 585 994**

• **IEEE INTERNATIONAL JOINT CONFERENCE ON NEURAL NETWORKS, Bd. 1, 18.November 1991 - 21.November 1991 SINGAPORE, Seiten 1242-1247, CHAN ET AL. 'Dynamic Channel Assignment for Cellular Mobile Radio System Using Feedforward Neural Networks'**
• **IEEE INTERNATIONAL CONFERENCE ON NEURAL NETWORKS, Bd. 1, 28.März 1993 - 1.April 1993 SAN FRANCISCO, US, Seiten 822d-822i, FRITSCH ET AL. 'An Integrated Approach to Cellular Mobile Communication Planning Using Traffic Data Prestructured by a Self-Organizing Feature Map'**
• **IEEE TRANSACTIONS ON VEHICULAR TECHNOLOGY, Bd. 43,Nr. 2, Mai 1994 NEW YORK US, Seiten 279279-288, CHAN ET AL. 'Neural Network-Based Dynamic Channel Assignment for Cellular Mobile Communication Systems'**

**Beschreibung**

Die Erfindung betrifft ein Mobilfunkübertragungssystem mit Feststationen und Mobilstationen.

Mobilfunkübertragungssysteme zur Abdeckung eines größeren Funkversorgungsbereiches werden schon seit längerem als cellulare Funknetze konzipert. In jeder Zelle eines solchen Funknetzes ist mindestens eine ortsfeste Funkstation vorgesehen, die eine Funkverbindung zu den in ihrer Funkzelle befindlichen Mobilstationen aufrechterhält. Um das für das jeweilige Funksystem verfügbare Frequenzband einer möglichst großen Teilnehmerzahl im gesamten Mobilfunksystem zugänglich zu machen, kommt der Punknetzplänung eine besondere Bedeutung zu.

Die Vergabe von Kanälen in einem Mobilfunknetz ist dabei ein schwieriges Problem der Funknetzplanung. Bisher wurde dies dadurch gelöst, daß in der Planungsphase über die zu erwartende Verkehrsdichte und die zu erwartende Funkausbreitung Vorhersagen gemacht wurden. Aus solchen Berechnungen ergeben sich dann Kanalbedarfszahlen für jede Funkfeststation und entsprechende Verträglichkeitsbedingungen zwischen den einzelnen Funkfeststationen. Mit geeigneten Rechenverfahren lassen sich dann hieraus Kanallisten erzeugen, d.h. Listen entsprechender Kanäle, die dann in den betreffenden Funkfeststationen installiert werden. Der Nachteil einer solchen Vorgehensweise besteht darin, daß man auf die Korrektheit der bei der Planung zugrundeliegenden Daten vertrauen muß und bei jeder Änderung des Netzes die Planung wiederholt werden muß. Insbesondere im Mikrozellenbereich ist diese Vorgehensweise zur Planung von Funknetzen nahezu unbrauchbar, da zum einen Mikrozellen naturgemäß einen Detaillierungsgrad erfordern, der nicht mehr effektiv vorherberechnet werden kann, und zum anderen Mikrozellen im Stadtbereich permanenten Veränderungen unterworfen sind. So können beispielsweise die Abschattungseigenschaften von Gebäuden nicht mehr wie bisher stochastisch modelliert werden, die nötige Genauigkeit der Feldstärkenausbreitung ist aber nicht effektiv vorherberechenbar. Andererseits stellen beispielsweise Baustellen und Verkehrsstaus permanente Veränderungen des Netzes dar. Da aber Mikrozellen die einzige Möglichkeit darstellen, um den gegenwärtigen bzw. zukünftigen dramatischen Anstieg der Funkteilnehmer zu bewältigen, erscheint insgesamt die Vorgehensweise einer Vorabplanung als nicht mehr praktikabel.

Aus EP 0 585 994 A2 ist ein Mobilfünkübertragungssystem der eingangs genannten Art bekannt.

Um die o. g. Problematik einer Vorabplanung zu vermeiden wurden in der Fachliteratur verschiedene Verfahren einer dynamischen Kanalvergabe diskutiert, bei denen die Zuordnung der Kanäle zu den Funkfeststationen nicht statisch vorgeplant wird, sondern die Kanäle einen gemeinsamen Pool bilden und dynamisch beim Netzbetrieb den einzelnen Gesprächen zugewiesen werden. Diese dynamischen Kanalvergabeverfahren erlauben gegenüber den statischen insbesondere eine Anpassung der Kanalvergaben an das sich zeitlich ändernde Verkehrsaufkommen des Mobilfunknetzes. Die Fachliteratur erwähnt jedoch als Nachteile dieser Verfahren auch ihre üblicherweise hohe Berechnungskomplexität, die zu sub-optimalen Lösungen und/oder zu hoher benötigter Rechenleistung führt.

Daher wird in der Veröffentlichung D1: "Dynamic Channel Assignment for Cellular Mobile Radio System Using Feedforward Neural Networks" von P. T. H. Chan et al., IEEE International Joint Conference on Neural Networks, Bd. 1, 18.-21.11.1991, Singapur, S. 1242-1247 die Benutzung sog. vorwärtsgekoppelter neuronaler Netzwerke vorgeschlagen. Diese Netzwerke werden mit repräsentativen Kanalvergaben trainiert, aus denen sie dann ein verallgemeinerungsfähiges Gedächtnis bilden, das zukünftige Kanalvergaben in Echtzeit durch Gedächtnisabruf vornehmen kann. Laut D1 werden dadurch nahezu optimale Kanalvergaben bei akzeptabler Verarbeitungskomplexität ermöglicht.

In der Veröffentlichung D2: "An Integrated Approach to Cellular Mobile Communication Planning Using Traffic Data Prestructured by a Self-Organizing Feature Map" von T. Fritsch et al., IEEE International Conference on Neural Networks, Bd. 1, 28.03.-01.04.1993, San Francisco, S. 822d-822i wird ein spezielles neuronales Netz, ein sog. Kohonen-Netzwerk bzw. eine sog. selbstorganisierende Neuronenkarte, zum Abbilden der Verkehrsverteilung eines Mobilfunknetzes auf eine zweidimensionale Neuronenkarte eingesetzt. Anschließend wird diese Neuronenkarte benutzt, um mit Hilfe eines auf "Simulated Annealing" basierenden Algorithmus die zu planenden Positionen der Funkfeststationen zu berechnen. Dagegen bereitete ein Erlernen der Funkfeldstärkenverteilung mit Hilfe eines Kohonen-Netzes verschiedene Probleme.

Der Erfindung liegt die Aufgabe zugrunde, eine weitere Möglichkeit anzugeben, die Kanalvergaben während des Netzbetriebes verallgemeinerungsfähig zu erlernen, um damit zukünftige Kanalvergaben nahezu optimal bei akzeptabler Verarbeitungskomplexität vornehmen zu können..

Diese Aufgabe wird bei einem Mobilfunksystem der eingangs genannten Art dadurch gelöst, daß das Mobilfunkübertragungssystem eine Einrichtung zur Vergabe von Funkkanälen aufweist, die dadurch gekennzeichnet ist,

- daß die Vergabe von Funkkanälen in Abhängigkeit der jeweiligen durch eine räumliche Komponente und/oder eine zeitliche Komponente bestimmten Funksituation erfolgt und
- daß die Vergabe der Funkkanäle auf der Anwendung des erweiterten Kohonen-Modells basiert, wobei die Funksituation den Eingabevektor und die Zuordnungen der Funkkanäle zu den jeweiligen Gesprächen / Gesprächswünschen den Ausgabevektor eines erweiterten Kohonen-Netzes bilden.

Die Erfindung geht dabei von der Kenntnis aus, daß es in einem Planungsschritt des Mobilfunkübertragungssystems nicht mehr notwendig ist, die Verkehrsdichte und Verbräglichkeitsinformation vorherberechnen zu müssen. Die dabei dynamisch erlernte Vergabe von Kanälen erfolgt auf einer mikroskopischen Ebene. Statt wie bisher Kanallisten pro Feststation zu vergeben (makroskopische Ebene), wird nun eine Kanalliste für jede Funksituation vergeben. Dabei ist jetzt eine Funksituation durch eine räumliche und eine zeitliche Komponente definiert. Die räumliche Komponente, der Funkort, wird durch den Vektor der Signalstärken aller Feststationen bestimmt und kann als eine Teilzelle des Einzugsbereichs der jeweiligen Feststation interpretiert werden. Die zeitliche Komponente, die Kanalsituation, wird durch den Verkehr der Kanalaktivitäten aller Kanäle bestimmt.

Daneben wird eine Echtzeit-Kanalvergabe-Komponente vorgeschlagen, die unter Verwendung der bis zu diesem Zeitpunkt gelernten Kanalvergabe, einem aktuellen Gespräch einen Kanal zuweist, und zwar in Abhängigkeit der aktuellen Funksituation. Es wird dabei vorausgesetzt, daß sich die Funkkanäle jeder Feststation ohne manuellen Eingriff umstimmen lassen. Außerdem wird davon ausgegangen, daß vor Beginn des Netzbetriebes eine initiale Kanalvergabe durchgeführt wird. Da erfahrungsgemäß zum Systemstart die Anzahl der Teilnehmer recht niedrig ist, sind keine sehr hohen Anforderungen an diese initiale Kanalvergabe vorgegeben. Sie kann adhoc oder mit Hilfe der bisher bekannten Methoden erfolgen. Ein wesentlicher Vorteil der Erfindung besteht dabei in der Steigerung der Verkehrskapazität des Netzes sowie in der Erhöhung seiner Betriebssicherheit. Da die Kanalzuweisungen nun nicht mehr auf unsicheren Planungsdaten, sondern auf erprobten Erfahrungen beruhen, werden die Zahl der Gesprächsverluste gesenkt und die Gesprächsqualitäten erhöht.

Somit ist es auch möglich, daß sich ein solches Funknetz ohne eine erneute Planung geänderten Ausbreitungs- und Verkehrsbedingungen anpaßt.

Weitere vorteilhafte Ausgestaltungen sind in den Unteransprüchen angegeben.

Im folgenden wird die Erfindung anhand der in den Figuren dargestellten Ausführungsbeispiele näher erläutert und beschrieben.

Es zeigen:

Fig. 1 ein zellular aufgebautes Mobilfunkübertragungssystem
Fig. 2 ein weiteres Ausführungsbeispiel eines zellular aufgebauten Mobilfunkübertragungssystems
Fig. 3 ein Flußablaufdiagramm zur Steuerung einer Echtzeit-Kanalzuordnung
Fig. 4 ein Flußablaufdiagramm unter Anwendung einer gelernten Abbildung mit Störung
Fig. 5 ein Flußablaufdiagramm unter Anwendung der gelernten Abbildung ohne Störung
Fig. 6 ein Flußablaufdiagramm zur Durchführung eines Lernschrittes
Fig. 7 eine topologie erhaltene Karte für die Kanalvergabe
Fig. 8 eine Prinzipdarstellung des erweiterten Kohonen-Modells.

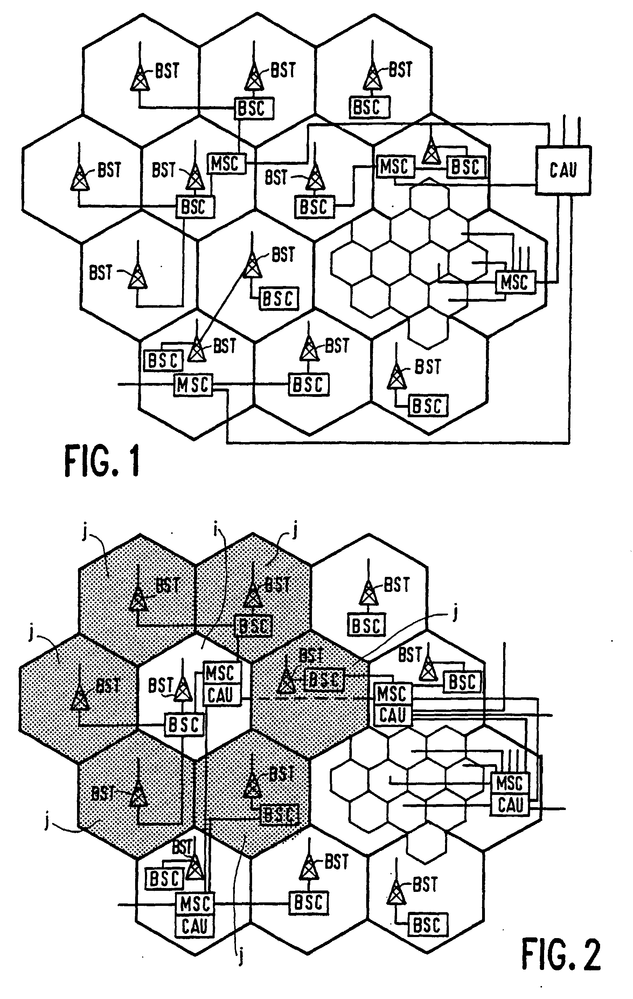

Fig. 1 zeigt ein Mobilfunkübertragungssystem mit Funkfeststationen, d.h. Sende-/Empfangsstationen BST (= Base Station Transceiver). Eine oder auch mehrere Funkfeststationen BST werden von einer Steuereinrichtung BSC (= Base Station Controller) gesteuert. Die Steuereinrichtungen BSC sind über Datenleitungen wiederum mit Funkvermittlungszentralen MSC (= Mobile Switching Center) verbunden. In den Funkvermittlungszentralen MSC erfolgt eine Überleitung der Funkgespräche in das öffentliche drahtgebundene Telekommunikationsnetz. Weiterhin ist eine mit den Funkvermittlungszentralen verbundene Kanalvergabeeinrichtung CAU (= Channel Allocation Unit) vorgesehen.

Für eine weitere Funktionsbeschreibung des Mobilfunkübertragungssystems wird beispielsweise auf die bereits eingangs erwähnte EP 585 994 A2 verwiesen.

Fig. 2 zeigt ein weiteres Ausführungsbeispiel eines zellularen Mobilfunkübertragungssystem. Dabei werden im wesentlichen die bereits im Zusammenhang mit Fig. 1 eingeführten Bezugszeichen verwendet. Zur Beschreibung der Funktion des Mobilfunkübertragunssystems wird ebenfalls auf die EP 585 994 A2 verwiesen.

**Beschreibung des Verfahrens**

**Voraussetzungen**

- Es gibt n Feststationen und insgesamt m zur Verfügung stehende Kanäle, wobei jede Feststation $j \in \{1,...,n\}$ jeden Kanal $i \in \{1,...,m\}$ benutzen kann.

- Jede Feststation besitzt im allgemeinen mehrere Kanallisten, deren Anzahl sich dynamisch nach der zu diesem Zeitpunkt an dieser Feststation ermittelten Anzahl von verschiedenen Funksituationen richtet. Daneben besitzt jede Feststation Steuerungseinrichtungen, mit deren Hilfe sie Veränderungen dieser Kanallisten beinflußen kann.

Die Kanallisten und deren Steuerungs einrichtungen können lokal an den Feststationen gehalten werden oder global an einer zentralen Stelle. Zusätzlich ist jede Implementierung möglich, die zwischen diesen beiden Extrema liegt.

- Es gibt eine Komponente, die die aktuell gelernte Kanalvergabe enthält. Diese kann beispielsweise zentral (MSC) oder dezentral (BSC) gehalten werden.

- Es gibt Kommunikationsverbindungen zwischen den Steuerungseinrichtungen der Feststationen und der *erlernten* Komponente, die in geeigneten Zeitabständen den für die Feststation interessanten Anteil der bis dahin aktuell gelernten Kanalvergabe übertragen. Daneben gibt es geeignete Synchronisationsmechanismen, die den Zugriff auf die erlernte Komponente steuern, falls auf Grund neuer Ereignisse die bis dahin *gelernte* Kanalvergabe verändert werden soll.

**Komponenten-Überblick**

Die beiden Komponenten des vorgeschlagenen Verfahrens sind:

1. Dynamisch erlernte Abbildung zur Kanalvergabe.
2. Echtzeit-Kanalzuordnungs-Komponente.

Es ist notwendig, in regelmäßigen Zeitabständen Qualitäts-Checks zu machen, da beim dynamischen Lernen zu Beginn und auch bei Netz-Veränderungen Kanalzuordnungen mit unzureichender Qualität auftreten können. Die Echtzeit-Komponente reagiert dabei auf die Ergebnisse aller Checks entsprechend mit Handover oder Gesprächsblockierung bzw. Gesprächsverlust. Um Rechenzeit und System-Overhead zu sparen, benutzt die Lern-Komponente hingegen im allgemeinen nur eine Teilmenge der Checks.

**Echtzeit-Komponente**

Pro Gespräch wird eine Instanz der Echtzeit-Komponente kreiert. Bei jedem Checkpoint steuert die Echtzeit-Komponente die aktuelle Kanalzuordnung. Dabei untersucht sie im wesentlichen die lokale Qualität des aktuell benutzten Kanals und sorgt dafür, daß ein Kanalwechsel erfolgt, falls die Kanalqualität nicht ausreichend ist. Die lokale Kanalqualität wird anhand der folgenden Kriterien bewertet.

1. Falls es sich um ein neues Gespräch handelt (Gesprächswunsch) mittels *channel sensing.*
2. Anderenfalls anhand der BER (Bit Error Rate) und der Signalstärke.

Darüber hinaus veranlaßt sie die Aktivierung der Lern-Komponente. Um Rechenzeit und System-Overhead zu sparen, erfolgt dies nur für einen Teil der Checkpoints. Entsprechend unterscheidet die Echtzeit-Komponente zwei Arten von Checkpoints:

1. Der Checkpoint wird nur dazu verwendet, um sicher zu stellen, daß die lokale Qaulität ausreichend ist.

2. Der Checkpoint stößt zusätzlich die Lernkomponete an: Das Zeitintervall bis zum nächsten Checkpoint wird von der Lern-Komponente zum Lernen benutzt.

Entsprechend der Unterscheidung der Checkpoints in zwei Kategorien, wird auch für den Fall, daß ein Kanalwechsel, auf Grund zu niedriger Qualität, erforderlich ist, unterschiedlich reagiert:

1. Nicht Lernen:
      Die Echtzeit-Komponente benutzt die der konkreten Funksituation zugeordnete Kanalliste, um einen neuen Kanal zu finden. Das entspricht der Verwendung der gelernten Abbildung ohne *Störung*.
2. Lernen:
      Die Echtzeit-Komponente benutzt nicht die der konkreten Funksituation zugeordnete Kanalliste, um einen neuen Kanal zu finden. Staritdesse führt sie einen Lernschritt durch. Dazu benutzt sie die bis dahin gelernte zentrale Abbildung und addiert eine Störung darauf. Dies entspricht einer stochastischen Suche im Suchraum aller möglicher Kanallisten. Dabei muß die zentrale Abbildung (die gelernte Kanalvergabe) für das nächte Zeitintervall für alle anderen Gespräche gesperrt werden.

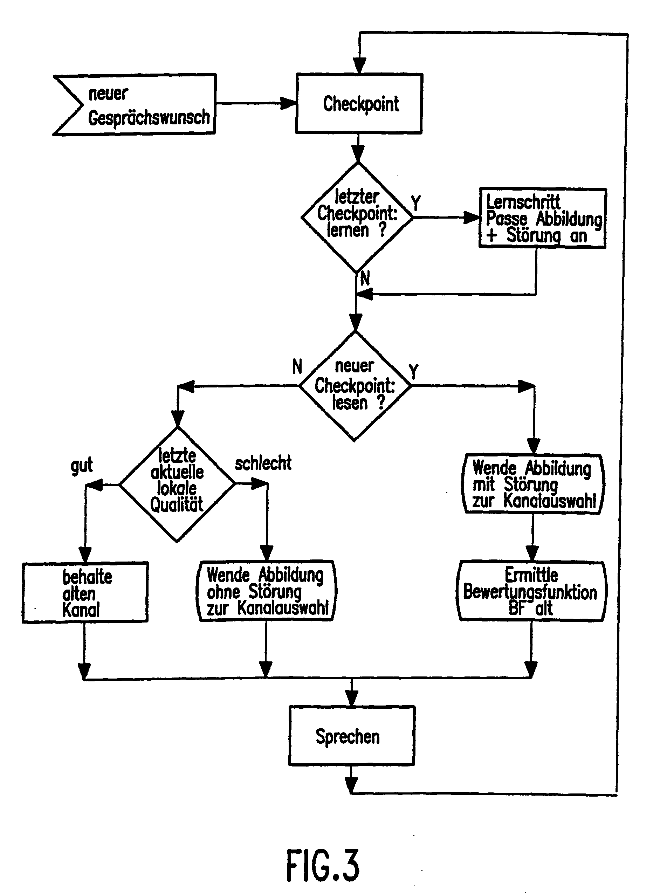

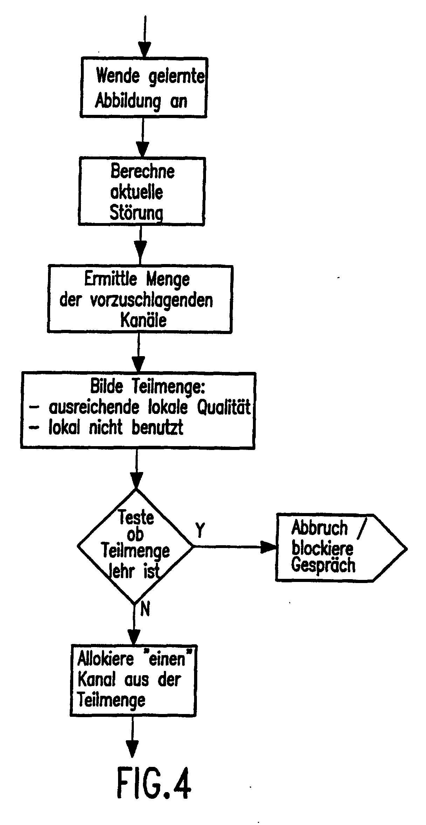

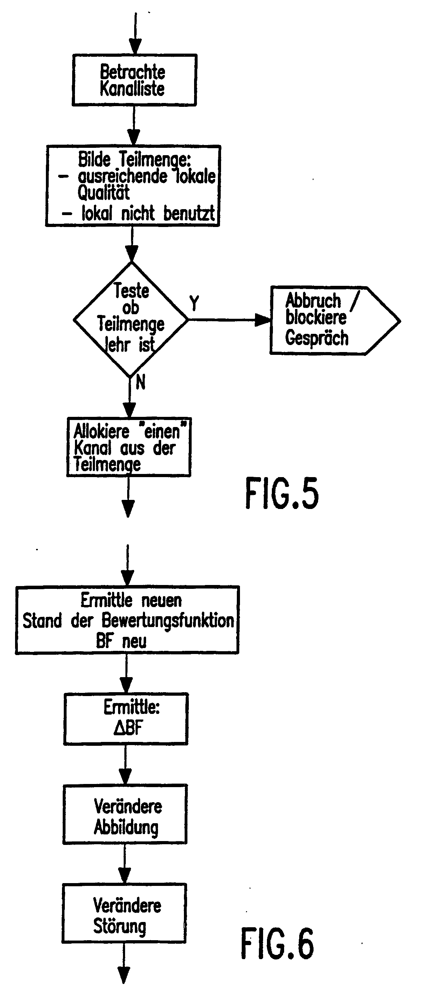

Die in den Figuren 3 bis 6 dargestellten Flußdiagramme stellen diesen Ablauf schematisch dar:

**Erlernen der Abbildung zur Kanalvergabe**

Das vorgeschlagene Verfahren, um die Kanalvergabe zu erlernen, beruht auf einer Anwendung des allgemeinen Ansatzes der *erweiterten Kohonen-Netze* (siehe Kapitel 5) auf die Aufgabe, Funksituationen innerhalb eines Funknetzes Kanälen zuzuordnen. Dabei wird die Variante des unüberwachten Lernens benutzt, siehe Anhang (Abschnitt 5.1.2).

Dazu müssen insbesondere die problemabhängigen Parameter des Kohonen-Ansatzes auf das Problem der Kanalzuordnung angepaßt werden. Dazu wird zunächst eine geeignete Codierung der Eingangs- und Ausgangsräume angegeben zusammen mit möglichen Metriken darauf. Anschließend wird auf die Suche im Ausgangsraum, der Menge aller Kanallisten, eingegangen. Im wesentlichen wird eine allgemeine Methode dazu angeboten, die stochastische Suche. Schließlich wird die Bewertungsfunktion beschrieben. Die Bewertungsfunktion kann als Antwort des Funknetzes auf einen Kanallisten-Vorschlag verstanden werden. Dazu werden die möglichen Kriterien erläutert, nach denen bewertet werden kann.

Die restlichen Parameter des allgemeinen Kohonen-Ansatzes lassen sich direkt auf unsere Anwendung übertragen.

**Festlegung der Definitions- und Wertebereiche *V* und *U* und zugehöriger Metriken**

1. Die Eingabemenge *V* des *erweiterten Kohonen-Netzes* besteht auf $(SS^n, CS^m)$ wobei:

(a) $ss = (ss_1,...,ss_n) \in SS^n$ ein *n*-Vektor ist, der für den aktuellen Funkort die von jeder Feststation (mittels Referenzkanals) empfangene Signalstärke (signal strength) angibt.

(b) $cs = (cs_1,...,cs_m) \in CS^m$ ein *m*-Vektor ist, der für den aktuellen Funkort die *Stör-Aktivität* an jedem Kanal i angibt, aktuelle Kanalsituation. Dabei bezeichnet physikalisch jeder logische Kanal ein Kanalpaar (Up-Link, Down-Link).

**Anmerkung:**

Dabei muß nun zwischen den beiden Fällen unterschieden werden, daß ein neues Gespräch allokiert werden soll bzw. ein altes Gespräch überprüft werden soll. Falls ein neues Gespräch allokiert werden soll, so können alle im Funknetz verfügbaren Kanäle mittels *Channel sensing* evaluiert werden. Wird ein aktuelles Gespräch überprüft, so kann der entsprechende Kanal nicht mittels *Channel Sensing* getestet werden. In diesem Fall kann man sich mit der Bit-Error-Rate behelfen.

Im folgenden wird $v = (ss,cs) = (ss_1,..., ss_n, cs_1,... cs_m) \in V$ die aktuelle Funksituation genannt.

2. Die Ausgabemenge $U = \{[0,1]\}^m$ des Kohonen-Netzes besteht aus *m*-Vektoren $u = (ch_1,...,ch_m) \in \{[0,1]\}^m$, die in Abhängigkeit der aktuellen Funksituation die Menge der in dieser Funksituation benutzbaren Kanäle determiniert.

**Anmerkung:**

Die Echtzeit-Komponente muß in der Lage sein, die kontinuierliche Information $u \in \{[0,1]\}^m$ in eine diskrete Information umzuwandeln, die dann als Kanalliste interpretiert werden kann.

$$= \begin{cases} 0 \\ 1 \end{cases} \text{Kanal } i \text{ darf an der entsprechenden Funksituation} \quad \begin{cases} \text{nicht benutzt werden} \\ \text{benutzt werden} \end{cases}$$

Für diese Aufgabe bieten sich insbesondere Ansätze aus dem Bereich der Fuzzy-Logik an. Die simpelste Form der Diskretisierung stellt das Auf- bzw. Abrunden dar:

$$\lfloor u + (0.5,...,0.5) \rfloor \in \{0,1\}^m$$

Geeignete Metriken müssen garantieren, daß Eingangsvektoren, die sich beispielsweise nur in einer Position voneinander unterscheiden, oder Eingangsvektoren, die sich in mehreren Positionen voneinander unterscheiden, dafür aber nur sehr wenig, in der Metrik nahe beieinander liegen. Dieselbe Anforderung gilt auch für den Ausgangsraum, der Menge aller möglichen Kanallisten, d.h. Kanallisten, die sich nur um einen Kanaleintrag unterscheiden, müssen sehr nahe beieinander liegen. Hier muß insbesondere auch garantiert sein, daß der Abstand der leeren Kanalliste zu jeder Kanalliste proportional zu der Mächtigkeit der Kanalliste ist. Die euklidische Norm bzw. der Haming-Abstand stellen diesbezüglich geeignete Metriken dar.

## Abbildung und Steuerung der Körnigkeit

Die zu erlernende Abbildung kann dann wie folgt definiert werden:

$$(SS^n, CS^m) \rightarrow U$$

## Anmerkung:

Die Echtzeit-Komponente macht daraus die folgende Abbildung:

$$(SS^n, CS^m) \rightarrow \{0,1\}^m$$

Dazu wird der hochdimensionale Raum $(SS^n, CS^m)$ auf eine 2-dimensionale Ebene abgebildet. Die dabei gelernte Abbildung der aktuellen Funksituation (aktueller Funkort und aktuelle Kanalsituation) auf einen zweidimensionalen Gitterpunkt ist nachbarschafts- und damit stetigkeitserhaltend. Diese 2-dimensionale Ebene ist natürlich in der Realität beliebig *zerknüllt* und repräsentiert in einer geeigneten Weise die Nachbarschaftsverhältnisse der einzelnen Funksituationen.

Desweiteren wird eine Zuordnung von Mengen benutzbarer Kanäle zu konkreten Gitterpunkten in der Neuronen-Karte gelernt, mit der Interpretation, daß die in dieser Menge vorkommenden Kanäle in dieser konkreten Funksituation benutzt werden können. Dabei profitiert das Lernen dieser Ausgangsvektoren wesentlich von den nachbarschafts- und damit stetigkeitserhaltenden räumlichen Anordnungen der Funksituationen auf der zweidimensionalen Neuronen-Karte.

Anschaulich betrachtet werden die beiden Dimensionen der Neuronen-Karte durch die Anzahl der im Funknetz benutzbaren Kanäle (Anzahl der verschiedenen Kanalsituationen) bzw. durch die Anzahl der im Funknetz existierenden Feststationen (Anzahl der verschiedenen Funkregionen) bestimmt. Aus diesem Grund wird deshalb die Anzahl der Neuronen durch:

$$\# \, Neuronen = k \cdot n \cdot l \cdot m$$

festgelegt, wobei die Faktoren $k$ und $l$ die Körnigkeit der Neuronen-Karte determinieren. Große Werte für $k$ haben beispielsweise zur Folge, daß sehr viele verschiedene Funkorte in der Neuronen-Karte identifiziert werden können bzw. unterschiedliche Kanallisten zugewiesen bekommen.

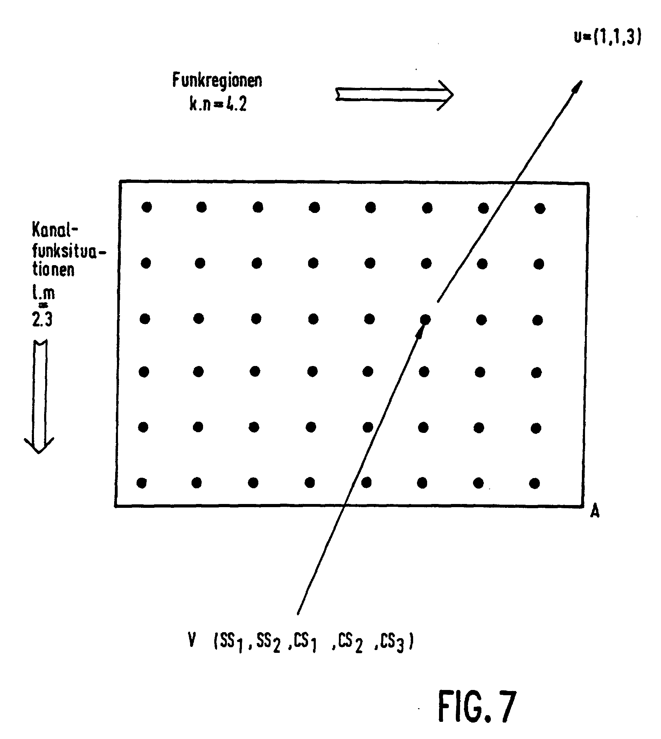

Fig. 7 veranschaulicht diesen Sachverhalt.

## Stochastische Suche

Die Aufgabe lautet, den Ausgangsraum, die Menge aller möglichen Kanallisten, zufällig zu durchwandern mit dem Ziel, zu der vorgegebenen Eingangskonfiguration eine optimale Kanalliste zu finden. Im allgemeinsten und einfachsten Fall kann dies mittels stochastischer Suche erfolgen. Dazu kann beispielsweise:

1. A ein $m$-dimensionaler Vektor von gaußverteilten Zufallsvariablen $\lambda$ bereitgestellt werden mit dem Mittelwert 0 und der Varianz 1.

2. und ein m-dimensionaler Vektor $\alpha_s$ von Suchschrittweiten mit der folgenden Interpretation:
$\alpha_{si}$ gibt für das Neuron $s$ die aktuelle Suchschrittweite des an i-ter Position zu lernenden Kanals.
Die Suchschrittweite gibt an, wie weit die Suche erfolgen soll. Naturgemäß ist dieser Parameter zu Beginn sehr groß und konvergiert zum Ende hin. Um der Abbildung die Möglichkeit zu lassen, sich auch an alle möglichen Veränderungen anpassen zu können, sollte dieser Wert nie ganz konvergieren und bei Bedarf (Systemveränderung) erhöht werden, siehe Abschnitt zur Plastizität, Abschnitt 4.4.6.

$$u^{\text{vorschlag}} := (w_s^{\text{out}} * \alpha_s * \Lambda)_{[0,1]}$$

wobei $()_{[0,1]}$ komponentenweise wie folgt definiert ist:

$$(x)_{[0,1]} := \begin{cases} 1 & , \lfloor x \rfloor > 0 \text{ und } x = \lfloor x \rfloor \\ x - \lfloor x \rfloor & , \text{sonst} \end{cases}$$

Dabei bezeichnet * die komponentweise Multiplikation von Vektoren und $\llcorner \lrcorner$ die untere Gauss-Klammer.

Anschaulich kann die stochastische Suche als Störung der bis dahin gelernten Abbildung betrachtet werden.

**Bewertungsfunktion**

Nachdem ein Kanal ausgewählt und eingeschaltet wurde, wird die Netzantwort des Systems evaluiert. Dazu gibt es eine Bewertungsfunktion $R$, die abstrakt gesprochen dem gesamten Funknetz einen Kostenwert zuordnet. Dabei orientiert sich dieser Wert an der konkreten Zielvorgabe. Beispielsweise kann diese Zielvorgabe lauten, die Gesamtstörung im Funknetz zu minimieren und gleichzeitig die Verkehrsanforderungen zu erfüllen, bzw. die Auslastung der Kanäle pro Feststation gleichmäßig zu verteilen etc. Die Evaluierung erfolgt dabei immer synchron mit genau einem Gespräch. Aus diesem Grund muß die Lern-Komponente in dieser Zeit für die anderen Gespräche gesperrt werden.

Falls man beispielsweise an der Minimierung der Gesamtstörung und gleichzeitiger Erfüllung der Verkehrsanforderung im Funknetz interessiert ist, so definiert man dann eine konkrete Bewertungsfunktion $R$, die zum aktuellen Zeitpunkt

1. die gültige Gesamtstörakitvität des Funknetzes angibt, wobei:

   (a) $R$ alle Kanäle und alle Feststationen betrachtet und
   (b) $R$ die Störaktivitäten auf Grund von Kanalqualitätsaussagen (Bit-Error-Raten, Signal/Interferenz-Verhältnissen etc.) errechnet und

2. $R$ gleichzeitig die Defizite bei den gestellten Verkehrsanforderungen berücksichtigt.

Als Erweiterung kann auch eine Verschlechterung der Bewertungsfunktion bis zu einer bestimmten Schwelle akzeptiert werden.

**Anpassung der Abbildung**

Die Anpassung der Abbildung, d.h. der Adaptionsschritt der Synapsenstärken, kann direkt aus dem Kohonen-Ansatz übernommen werden. Anzumerken ist noch, daß die Abstansfunktion $h_{rs}$ einen Parameter darstellt, der die Plastizität des Systems regulieren kann, siehe Abschnitt 5.1. Zu Beginn ist die Abstandsfunktion so eingestellt, daß der Radius der von der Adaption betroffenen Neuronen sehr groß ist. Dieser Radius nimmt dann mit zunehmender Konvergenz ab. Um Adaptionen an mögliche Veränderungen des Funknetzes zu ermöglichen, darf dieser Radius nie ganz verschwinden bzw. muß sogar bei Bedarf erhöht werden können.

**Anpassung an zeitliche Veränderungen**

Wie schon in den vorherigen Abschnitten erwähnt wurde, beinhalten die Parameter:

1. Lernschrittweite und

2. Abstandsfunktion

die Möglichkeit, die Plastizität des Systems zu steuern.

Auf die Kanalvergabe bezogen bedeutet das:

Diese Parameter dürfen nie so eingestellt sein, daß das System einen konvergierten Zustand eingenommen hat, was einer *eingefrorenen* Kanalvergabe entsprechen würde. Vielmehr muß auch die Möglichkeit enthalten sein, diese Parameter bei Bedarf *aufzulockern,* um so eine Anpassung der Kanalvergabe an die neuen Funknetz-Veränderungen zu erlauben.

Indikatoren für eine Veränderung des Funknetzes müssen deshalb beobachtet werden:

1. Mittlere Kanalbedarfszahl pro Feststation bzw. Funksituation verändert sich.

2. Globaler bzw. lokaler Interferenzpegel verändert sich.

## Erweiterungen

1. Störungen, die durch Interferenz entstehen werden, können *aktiv* oder *passiv* verursacht sein. Von aktiver Störung spricht man dann, wenn eine Mobilstation (Feststation) von einer anderen Mobilstation (Feststation) gestört wird. Passive Störung bezeichnet die Situation, daß eine Mobilstation (Feststation) bei einer anderen Mobilstation (Feststation) Störung verursacht.

Falls nur der lokale Effekt, d.h. die aktive Störung berücksichtigt wird, kann überwacht (siehe Abschnitt 5.1.1) gelernt werden. In diesem Fall kann auf Grund der Eingabemenge selbst schon eine Aussage über aktive Störung gemacht werden. Vergleicht man die Signalstärke der Festation (in deren Funkregion die Mobile sich gerade befindet) mit allen Kanalqualitäten (Kanalsituationen), unter Verwendung eines Schwellwertes, der den minimal zulässigen Störabstand $C/I$ angibt, so kann dann lokal entschieden werden, welche Kanäle aktuell benutzt werden können. Diese Liste von benutzbaren Kanälen stellen die Steuerungsaktion $u$ dar, die vom Lehrer geliefert wird. Das erlernte Ergebnis wäre eine Tabelle, deren Einträge entsprechend der Verteilung der Eingabewerte unterschiedlich fein wäre.

Dies hätte im allgemeine keine globale Optimierung des Funknetzes mehr zur Folge, sondern nur noch eine lokale Optimierung.

2. Die Veränderung der Lern-Komponente erfolgt bisher immer nur synchron mit einem Gespräch.

Das kann dahingehend verändert werden, daß nun sowohl zeitlich als auch räumlich integriert werden kann. (Summation über Zeitfenster bei einer MS, Summation über mehrere gleichzeitige Gespräche).

3. Die Bewertungsfunktion kann allgemeiner gestaltet werden. Die folgenden Kriterien können mit in die Bewertung eingehen:

(a) Lokale Auslastungen von Feststationen.
(b) Verkehr zum Festnetz.
(c) Stabilität (Anzahl der Handover).

4. Die Bewertungsfunktion kann von einem globalen Wert auf eine Vielzahl lokaler Werte aufgeteilt werden:

(a) als $n$-dimensionaler Vektor, der pro Feststation die Störinformation enthält.
(b) als $m$-dimensionaler Vektor, der pro Kanal die Störinformation enthält.

Die Bewertung des Zuwachses könnte dann entsprechend angepaßt werden. Auf diese Weise hätte man mehr Freiheitsgrade bei der Bewertungsfunktion.

5. Der Eingaberaum $U$ kann eingeschränkt werden, so daß nicht mehr die Feldstärken aller Feststationen betrachtet werden, sondern nur noch von einer Teilmenge von Feststationen, insbesondere nur die Nachbarstationen.

6. Die Dimension der *Neuronen-Karte* im *erweitereten Kohonen-Netz* kann um einige Dimensionen vergrößert werden.

## Anhang: Erweitertes Kohonen-Netz

Den Hintergrund für die *erweiterten Kohonen-Netze* bildet die Neuroinformatik. Dort spielen einerseits die Repräsentation sensorischer Eingangssignale im Gehirn und andererseits die dazu komplemetäre Aufgabe der Ansteuerung der Muskulatur, eine zentrale Rolle.

Das *Kohonen Modell* stellt eine Abstraktion des Gehirns als topologieerhaltende Neuronen-Karte dar. Dabei ist das Ziel dieser Neuronen-Karten eine möglichst gute, zweidimensionale Repräsentation der gegenseitigen Nachbarschaftsverhältnisse der Eingangssignale zu erstellen. Anderseits wird diese Neuronen-Karte als motorische Karte aufgefaßt, in der Bewegungskommandos (Steuerungsaktionen) auf zweidimensionale (Erregungs-) Orte in der Karte abgebildet sind.

Anzumerken ist noch, daß das Kohonen-Netz nur an Hand der erfolgreich vorgeschlagenen Aktionen lernt.

Desweiteren sei erwähnt, daß das Problem der Steuerung der Plastizität selbst nicht behandelt wird.

**Algorithmus**

Grundsätzlich betrachtet man einen mehrdimensionalen Raum $V$ von Eingangsreizen bzw. Eingangssignalen $v = (v_1,...,v_l)$ und ein zweidimensionales Neuronen-Gitter (Netzwerk) $A$ formaler Neuronen. Entsprechend der statistischen Verteilung der Eingangsreize, wird dem Netzwerk ein Punkt $v$ als *Stimulus* angeboten. Dieser führt zur Auswahl eines Erregunszentrums $s$ im Neuronengitter $A$. Der Ort $s$ wird dabei ausschließlich aufgrund der externen Eingangssignale $v$ bestimmt, wobei $s$ den Ort maximaler Erregung darstellt. Alle Neuronen in der Nachbarschaft dieses Erregungszentrums nehmen dabei an einem Adaptionsschritt teil. Dieser besteht in einer Verschiebung der Gewichts-Vektoren (Synapsenstärken) $w_r^{in} = (w_{r1}^{in},...,w_{rl}^{in})$ auf $v$ hin. Das Ausmaß dieser Verschiebung wird im wesentlichen durch eine Abstandsfunktion $h_{rs}$ festgelegt. Die Erregungsantwort $h_{rs}$ legt die Grösse der Nachbarzone und damit die Reichweite der Wechselwirkung zwischen Eingangsreiz und den von einem Adaptionsschritt erfaßten Neuronen fest. Das Ausmaß der Verschiebung nimmt mit wachsenden Abstand vom Zentrum $s$ ab. Desweiteren beeinflußt eine Lernschrittweite $\varepsilon$ ebenfalls das Ausmaß der Verschiebung. Zusätzlich gehört im Falle von Neuronen-Karten, die für den Einsatz von Steuerungsaufgaben bestimmt sind, zu jedem Neuron $r$ ein Ausgangswert oder - vektor $w_r^{out}$. Die Gesamtheit aller $w_r^{out}$ bilden eine Belegung des Gitters mit Werten eines zweiten (im allgemeinen mehrdimensionalen) Raums $U$. In diesem Fall besteht der *Stimulus* nicht nur aus einem Eingangsreiz $v$, sondern auch aus einer Steuerungsaktion $\upsilon \in U$. Entsprechend dem Adaptionschritt für die Synapsenstärken gibt es nun auch einen Adaptionsschritt für die Ausgangsvektoren, der nun im wesentlichen aus einer Verschiebung der Ausgangsvektoren $w_r^{out}$ auf $u$ hin besteht.

Man unterscheidet die folgenden Abbildungen:

$$\Phi_w^{in} : V \to A, v\in V \to s := \phi_w^{in} (v)\in A$$

und

$$\Phi : V \to U, v \to \Phi(v) := w^{out}_{\phi w^{in(v)}}$$

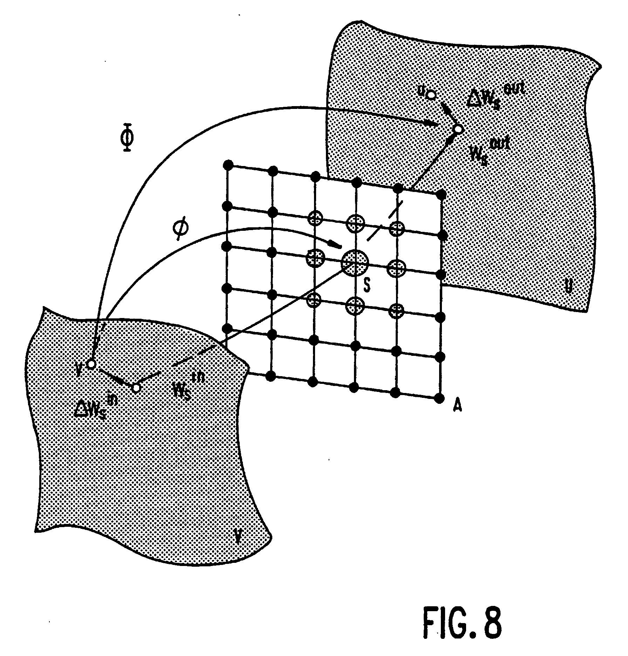

Fig. 8 illustriert diesen Sachverhalt.

Beim Lernen der eben erwähnten Abbildungen unterscheidet man zwischen zwei Arten:

1. Lernen mit Unterweisung:
Das Neuronen-Netzwerk erhält als Eingabe die gesamte Steuerungsaktion ($v$, $u$). Dies wird auch als Lernen mit Lehrer bezeichnet. Ziel ist es dabei den Lehrer allmählich zu ersetzen, sodaß das Netzwerk schließlich die gelernte Abbildung selbständig anwenden kann.

2. Lernen ohne Unterweisung:
Das Neuronen-Netzwerk erhält als Eingabe nicht die gesamte Steuerungsaktion ($v$, $u$), sondern nur den Eingangsreiz $v$. Nun wird an Hand einer Bewertungsfunktion $R$ gelernt. Im Gegensatz zum Lernen mit Lehrer gibt die Bewertungsfunktion nicht mehr an, welche Steuerungsaktion $u$ zu wählen ist, sondern nur, wie gut der erreichte Zustand die Aufgabenstellung erfüllt. Das Lernziel besteht im Auffinden einer Steuerungsaktion $u$, deren Anwendung einen möglichst hohen Zuwachs der Bewertungsfunktion $R$ zur Folge hat. Dies erfolgt am universellsten durch einen stochastischen Suchprozeß.

**Lernen mit Unterweisung**

Der konkrete Algorithmus sieht dann wie folgt aus:

1. Initialisierung:
Start mit geeigneten Anfangswerten für die Synapsenstärken $w_r^{in}$ und der Ausgans-Vektoren $w_r^{out}$. In Abwesenheit irgendwelcher a-priori-Informationen können diese Werte zufällig gewählt werden.

2. Stimuluswahl für die Eingabe:
Entsprechend der Wahrscheinlichkeitsdichte $P(v)$ wird ein zufälliger Vektor $v$ gewählt, der dem Neuronen-Netzwerk als sensorisches Signal angeboten wird.

3. Bestimmung des Erregungszentrums:
Für $v$ wird das Erregungszentrum $s : = \phi_w^{in}(v) \in A$ in der Karte $A$ bestimmt, und zwar entsprechend der folgenden Bedingung:

$$\sum_p w_{sp}^{in} v_p \;=\; \max_r \sum_p w_{rp}^{in} v_p$$

4. Stimuluswahl für die Ausgabe:
Die Steuerungsaktion $u$ wird vom Lehrer zur Verfügung gestellt. Dabei liefert der Lehrer die zu dem Eingangssignal $v$ gewünschte Steuerungsaktion $u$. Insgesamt kann jetzt der vollständige Stimulus $(v,u)$ dem Neuronen-Netzwerk angeboten werden.

5. Adaptionsschritt der Synapsenstärken:
Für die Synapsenstärken wird ein Lernschritt durchgeführt:

$$w_r^{in} : = w_r^{in} + \varepsilon\, h_{rs}(v - w_r^{in})$$

6. Adaptionsschritt der Ausgangsvektoren:
Für die Ausgangsvektoren wird ein Lernschritt durchgeführt:

$$w_r^{out} : = w_r^{out} + \varepsilon' h'_{rs}(u - w_r^{out})$$

Bemerkung:

Der Adaptionsschritt für die Ausgangsvektoren benutzt im allgemeinen eine eigene Lernschrittweite $\varepsilon'$ und eine eigene Abstandsfunktion $h'_{rs}$. In konkreten Fällen können diese Größen für beide Adaptionsschritte identisch sein.

**Lernen ohne Unterweisung**

Der wesentliche Unterschied zum Lernen mit Unterweisung besteht darin, daß nun die Steuerungsaktion $u$ nicht von einem Lehrer vorgegeben wird. Vielmehr wird eine Bewertungsfunktion $R$ zum Lernen benutzt. $R$ gibt nicht mehr an, welche Steuerungsaktion $u$ zu wählen ist, sondern nur, wie gut oder wie schlecht der erreichte Zustand die gewünschte Aufgabenstellung erfüllt. Die allgemeinste Arte eine Steuerungsaktion $u$ zu finden, die einen hohen Zuwachs der Bewertungsfunktion zur Folge hat, ist das stochastische Suchen. In diesem Zusammenhang spielen pro Neuron $s$ die folgenden Größen eine wesentliche Rolle:

1. **Suchschrittweite:**
Die Suchschrittweite $\alpha_s$ steuert das stochastische Suchen. Eine Möglichkeit ein neues $\upsilon$ vorzuschlagen besteht darin, den bisher gefundenen Ausgabevektor $w_s^{out}$ stochastisch zu verändern:

$$u^{vorschlag} : = w_s^{out} + \alpha_s \Lambda$$

Dabei ist $\Lambda := (\lambda,...,\lambda)$ ein $dim(U)$-Vektor von einzelnen gaußverteilten Zufallsvariablen $\lambda$. $\alpha_s > (0,...,0)$ bestimmt die mittlere Größe der Suchschrittweite für das Neuron $s$. Das bedeutet, daß $\alpha_{si}$ für ein $i \in \{1,...,dim(U)\}$ die Suchschrittweite für das Neuron $s$ an dem $i$-ten Ausgangswert bestimmt.

### 2. Bewertungsfunktion:

Die Bewertungsfunktion $R$ gibt an, wie gut eine vorgeschlagene Steuerungsaktion $u^{vorschlag}$ die gestellte Aufgabenstellung erfüllt. Faßt man die zu lösende Aufgabe als Optimierungsaufgabe auf, so stellt die Bewertungsfunktion $R$ die problemabhängige Formulierung der Aufgabenstellung als Kostenfunktion dar, deren Optima gesucht sind.

### 3. Mittlerer erzielter Bewertungszuwachs:

Das Ziel des Neuronen-Netzwerks besteht darin, sich laufend zu verbessern, bis die gewünschte Abbildung erlernt ist und damit ein stabiler Zustand eingetreten ist. Aus diesem Grund ist das Netzwerk nur an solchen *Steuerungsaktionen* interessiert, die eine Verbesserung darstellen. Dabei muß zu einem aktuellen Zeitpunkt pro Neuron entschieden werden, ob eine vorgeschlagene Steuerungsaktion $u^{vorschlag}$ eine Verbesserung der bisher vom Neuronen-Netzwerk erbrachten Leistung darstellt oder nicht. Dazu wird der durch die Bewertungsfunktion $R$ implizierte Bewertungszuwachs $\Delta R$ pro Neuron $s$ aktualisiert. Dazu enthält $b_s$ den bis zum aktuellen Zeitpunkt am Neuron $s$ mittleren erzielten Bewertungszuwachs. Der konkrete Algorithmus zum Lernen ohne Unterweisung unterscheidet sich vom vorherigen Lernen mit Unterweisung nur in Punkt 4.

### 1. Initialisierung:

### 2. Stimuluswahl für die Eingabe:

### 3. Bestimmung des Erregunszentrums:

### 4. Stimuluswahl für die Ausgabe:

Steuerungsaktion $u$ wird vorgeschlagen und evaluiert:

(a) **Generierung eines Vorschlags für Steuerungsaktion:** Stochastische Generierung eines Vorschlags $u^{vorschlag}$ für die nächste Steuerungsaktion:

$$u^{vorschlag} := w_s^{out} + \alpha_s \Lambda$$

(b) **Berechnung des aktuellen Bewertungszuwachses:**

Auf der Basis von $u^{vorschlag}$ wird der aktuelle Bewertungszuwachs $\Delta R$ berechnet.

(c) **Test der Akpzetanz des Vorschlags:**

Die vorgeschlagene Steuerungsaktion $u^{vorschlag}$ wird dahin getestet, ob es eine Verbesserung der bisherigen vom Neuronen-Netzwerk erbrachten Leistung darstellt. Nur falls der durch $u^{vorschlag}$ erzielte Bewertungszuwachs $\Delta R$ den bisher vom Neuron $s$ erzielten mittleren Zuwachs $b_s$ übertrifft, wird eine Adaption des Neuronen-Netzwerkes vorgenommen.

(d) **Aktualisierung des erzielten mittleren Bewertungszuwachses des aktuellen Neurons:**

Nach jeder Auswahl eines Neurons s wird anhand des tatsächlich erreichten Bewertungszuwachs $\Delta R$ der bis zu diesem Zeitpunkt mittlere erzielte Bewertungszuwachs $b_s$ des Neurons s aktualisiert. Am einfachsten kann dies beispielsweise durch die folgende Vorschrift erfolgen:

$$b_s := b_s + \gamma(\Delta R - b_s)$$

Dies hat die Wirkung einer Tiefpaßglättung der Folge der letzten erzielten Bewertungsänderungen, wobei die Zeitkonstante durch $\gamma^{-1}$ gegeben ist.

(e) **Adaptionsregel für Suchschrittweiten:**

Falls eine Adaption durchgeführt wird, so wird auch die Suchschrittweite $\alpha_s$ entsprechend der Punkte 5 und 6 angepaßt, da an jedem Adaptionschritt von $s$ auch die Nachbarneuone $\tau \neq s$ beteiligt sind.

$$\alpha_\tau := \alpha_\tau + \varepsilon'' h''_{rs}(\alpha - \alpha_\tau)$$

Dabei ist $\alpha$ für alle Schritte gleich und gibt den Grenzwert an. Falls die $w_r^{out}$ konvergieren sollen, wählt man $\alpha = (0,...,0)$.

Insgesamt ist jetzt der Stimulus ($v$, $u$) dem Neuronen-Netzwerk angeboten.

5. **Adaptionsschritt der Synapsenstärken:**

6. **Adaptionsschritt der Ausgangsvektoren:**

**Literatur**

H. Ritter, T. Martinez und K. Schulten: Neuronale Netze; Eine Einführung in die Neuroinformatik selbsorganisierender Netzwerke; Addison-Wesley 1990.

**Patentansprüche**

1. Kanalvergabeeinrichtung für ein Mobilfunkübertragungssystem, mit Mitteln zur Vergabe von Funkkanälen in Abhängigkeit der jeweiligen durch eine räumliche Komponente und/oder eine zeitliche Komponente bestimmten Funksituation , **dadurch gekennzeichnet,**
   **daß** die Vergabe der Funkkanäle auf der Anwendung des erweiterten Kohonen-Modells basiert, wobei die Funksituation den Eingabevektor und die Zuordnungen der Funkkanäle zu den jeweiligen Gesprächen bzw. Gesprächswünschen den Ausgabevektor eines erweiterten Kohonen-Netzes bilden.

2. Kanalvergabeeinrichtung nach Anspruch 1,
   **dadurch gekennzeichnet,**
   **daß** die räumliche Komponente durch die Signalfeldstärken der Funkfeststationen bestimmt wird und daß die zeitliche Komponente durch die Kanalaktivität der Funkkanäle bestimmt ist.

3. Kanalvergabeeinrichtung nach einem der Ansprüche 1 bis 2,
   **dadurch gekennzeichnet,**
   **daß** die Kanalvergabeeinrichtung für eine Echtzeit-Kanalvergabe vorgesehen ist.

4. Funkfeststation für ein Mobilfunkübertragungssystem mit einer Kanalvergabeeinrichtung nach einem der Ansprüche 1 bis 3.

5. Base Station Controller (BSC) für ein Mobilfunkübertragungssystem mit einer Kanalvergabeeinrichtung nach einem der Ansprüche 1 bis 3.

6. Mobile Switching Center (MSC) für ein Mobilfünkübertragungssystem mit einer Kanalvergabeeinrichtung nach einem der Ansprüche 1 bis 3.

7. Mobilfunküberaagungssystem mit einer Kanalvergabeeinrichtung nach einem der Ansprüche 1 bis 3.

**Claims**

1. A channel allocation arrangement for a mobile radio transmission system with means for allocating radio channels in dependence on the prevailing radio situation which is determined by a space-dependent component and/or a time-dependent component, **characterized in that** the allocation of the radio channels is based on thte use of the extended Kohonen model, wherein the radio situation forms the input vector and the allocations of the radio channels to the respective calls or call requests form the output vector of an extended Kohonen network.

2. A channel allocation arrangement as claimed in claim 1, **characterized in that** the space-dependent component is determined by the signal field strengths of the radio base stations, and **in that** the time-dependent component is determined by the channel activity of the radio channels.

3. A channel allocation arrangement as claimed in one of the Claims 1 and 2, **characterized in that** the channel allocation arrangement is designed for providing a real-time channel allocation.

4. A radio base station for a mobile radio transmission system with a channel allocation arrangement as claimed in any one of the claims 1 to 3.

5. A base station controller (BSC) for a mobile radio transmission system with a channel allocation arrangement as claimed in any one of the claims 1 to 3.

6. A mobile switching center (MSC) for a mobile radio transmission system with a channel allocation arrangement as claimed in any one of the claims 1 to 3.

7. A mobile radio transmission system with a channel allocation arrangement as claimed in any one of the claims 1 to 3.


**Revendications**

1. Dispositif d'attribution de canaux pour un système de radiotransmission mobile avec des moyens pour l'attribution de canaux radio en fonction de la situation radio respective déterminée par une composante spatiale et/ou une composante temporelle, **caractérisé en ce que** l'attribution des canaux radio se base sur l'utilisation du modèle de Kohonen élargi, la situation radio formant le vecteur d'entrée et les attributions des canaux radio aux conversations respectives ou aux souhaits de conversations le vecteur de sortie d'un réseau de Kohonen élargi.

2. Dispositif d'attribution de canaux selon la revendication 1, **caractérisé en ce que** la composante spatiale est déterminée par les intensités de champ de signaux des stations radio fixes et que la composante temporelle est déterminée par l'activité de canal des canaux radio.

3. Dispositif d'attribution de canaux selon l'une des revendications 1 à 2, **caractérisé en ce que** le dispositif d'attribution de canaux est prévu pour l'attribution de canaux en temps réel.

4. Station radio fixe pour un système de radiotransmission mobile avec un dispositif d'attribution de canaux selon l'une des revendications 1 à 3.

5. Base Station Controller (BSC) pour un système de radiotransmission mobile avec un dispositif d'attribution de canaux selon l'une des revendications 1 à 3.

6. Mobile Switching Center (MSC) pour un système de radiotransmission mobile avec un dispositif d'attribution de canaux selon l'une des revendications 1 à 3.

7. Système de radiotransmission mobile avec un dispositif d'attribution de canaux selon l'une des revendications 1 à 3.

FIG. 1

FIG. 2

neuer
Gesprächswunsch

Checkpoint

letzter
Checkpoint:
lernen ?

Y

Lernschritt
Passe Abbildung
+ Störung an

N

neuer
Checkpoint:
lesen ?

N

Y

letzte
aktuelle
lokale
Qualität

gut

schlecht

Wende Abbildung
mit Störung
zur Kanalauswahl

behalte
alten
Kanal

Wende Abbildung
ohne Störung
zur Kanalauswahl

Ermittle
Bewertungsfunktion
BF alt

Sprechen

FIG.3

Wende gelernte
Abbildung an

Berechne
aktuelle
Störung

Ermittle Menge
der vorzuschlagenden
Kanäle

Bilde Teilmenge:
— ausreichende lokale Qualität
— lokal nicht benutzt

Teste
ob
Teilmenge
leer ist

Y → Abbruch /
blockiere
Gespräch

N

Allokiere "einen"
Kanal aus der
Teilmenge

# FIG.4

Betrachte
Kanalliste

Bilde Teilmenge:
- ausreichende lokale
Qualität
- lokal nicht benutzt

Teste
ob
Teilmenge
leer ist

Y → Abbruch /
blockiere
Gespräch

N

Allokiere "einen"
Kanal aus der
Teilmenge

**FIG.5**

Ermittle neuen
Stand der Bewertungsfunktion
BF neu

Ermittle:
ΔBF

Verändere
Abbildung

Verändere
Störung

**FIG.6**

17

$$u = (1,1,3)$$

Funkregionen
k.n = 4.2

Kanalfunksituationen

l.m
=
2.3

A

V  (SS$_1$, SS$_2$, CS$_1$, CS$_2$, CS$_3$)

# FIG. 7

FIG. 8